# EUROPÄISCHE PATENTSCHRIFT

(11) **EP 4 214 476 B1**
(45) Veröffentlichungstag und Bekanntmachung des Hinweises auf die Patenterteilung: **28.05.2025**
(21) Anmeldenummer: 21765613.1
(22) Anmeldetag: 16.08.2021
(51) Int. Cl.: G01F 1/84

(54) **VIBRONISCHER MESSAUFNEHMER MIT EXZENTRISCHER ANREGUNG**
VIBRONIC SENSOR HAVING ECCENTRIC EXCITATION
CAPTEUR VIBRONIQUE À EXCITATION EXCENTRIQUE

(30) Priorität: 15.09.2020 DE 102020123999
(43) Veröffentlichungstag der Anmeldung: 26.07.2023
(73) Patentinhaber: Endress+Hauser Flowtec AG, 4153 Reinach (CH)
(72) Erfinder: ZHU, Hao, 85354 Freising (DE); HOLLINGER, Claude, 4147 Aesch (CH)
(74) Vertreter: Endress + Hauser Group Services (Deutschland) AG+Co. KG
(86) Internationale Anmeldenummer: PCT/EP2021/072743
(87) Internationale Veröffentlichungsnummer: WO 2022/058108

(56) Entgegenhaltungen:
- WO-A2-2004/099734
- DE-T2- 3 650 535
- US-A- 5 321 991
- US-B2- 7 124 646
- US-B2- 8 695 438

## Beschreibung

Die vorliegende Erfindung betrifft einen vibronischen Messaufnehmer zur Massedurchfluss- und Dichtemessung mit exzentrischer Anregung.

Die Dichte eines im Messrohr geführten Mediums wird mittels eines vibronischen Messaufnehmers auf Basis der Eigenfrequenzen von Schwingungsmoden des Messrohrs ermittelt. Im Idealfall ist das Medium inkompressibel sodass das Medium bei Messrohrschwingungen der Bewegung des Messrohrs folgt. Wenn das Medium jedoch kompressibel wird, beispielweise aufgrund einer Gasbeladung des Mediums, können die Massedurchflussmessung und die Dichtemessung fehlerbehaftet sein, da das Medium beginnt, gegenüber dem Messrohr zu schwingen. Der Einfluss dieses so genannten Resonatoreffekts kann durch Erfassen der Eigenfrequenzen zweier Schwingungsmoden korrigiert werden, wobei im Wesentlichen eine Schallgeschwindigkeit des Mediums ermittelt wird, für die sich aus den beiden Eigenfrequenzen übereinstimmende Dichtemesswerte für das Medium ergeben. Einzelheiten dazu sind beispielsweise in DE 10 2015 122 661 A1 offenbart. Üblicherweise werden hierzu die erste und zweite symmetrische Schwingungsmode angeregt, also die f1 Mode und die f3 Mode. Die Eigenfrequenz der zweiten symmetrischen Schwingungsmode f3 kann aber bei manchen Messaufnehmern so hoch sein, dass sie im Bereich der Resonanzfrequenz des Mediums liegt, so dass eine stabile Anregung der zweiten symmetrischen Schwingungsmode nicht zuverlässig gewährleistet werden kann. In diesem Fall ist die erste antisymmetrische Schwingungsmode eine attraktive Alternative, da die Eigenfrequenz dieser Mode niedriger ist, und somit ein größerer Abstand zur Resonanzfrequenz des Messrohrs zu erwarten ist.

US 2003/0131669 A1 offenbart einen vibronischen Messaufnehmer mit zwei exzentrisch angeordneten Erregeranordnungen, die mit großem Abstand zueinander symmetrisch bezüglich der Messrohrmitte positioniert sind. Die Auswahl der anzuregenden Moden erfolgt über die Frequenz und die Phasenbeziehung der Erregersignale, mit denen die beiden Erreger beaufschlagt werden. Abweichungen in der Phasenbeziehung bzw. ungleiche Amplituden der Erregerkräfte haben die Anregung anderer, unerwünschter Moden zur Folge. Dies kann zu unerkannten Messfehlern führen, die damit nicht kompensierbar sind. Zudem gehen zwei Erreger, die unabhängig voneinander anzusteuern sind mit einem erhöhten Verkabelungs- und Schaltungsaufwand einher.

US 5,321,991 A1 und WO 2004/099734 A2 offenbaren Coriolis-Messaufnehmer mit seismischen Erregern die mit Spannvorrichtungen an einem Messrohr in Längsrichtung exzentrisch montiert werden können, um höhere Moden als die Grundmode anregen zu können.

DE 3 650 535 T2 offenbart einen Coriolis-Messaufnehmer mit zwei parallel geführten, U-förmigen Messrohren, wobei die Messrohre jeweils einen Bogen zwischen zwei parallelen Schenkeln aufweisen, und wobei die beiden Schenkel mit einem im Wesentlichen senkrecht zu ihnen verlaufenden Träger verbunden sind. Der Coriolis-Messaufnehmer umfasst weiterhin eine elektrodynamische Erregeranordnung sowie eine einlaufseitige und eine auslaufseitige elektrodynamische Schwingungssensoranordnung die jeweils eine Baugruppe an den beiden Trägerkörpern aufweisen. Die Erregeranordnung erscheint bezogen auf die Messrohrlängsachse mittig positioniert, um die Biegeschwingungsgrundmode anzuregen.

Es ist die Aufgabe der vorliegenden Erfindung einen vibronischen Messaufnehmer bereitzustellen, der eine Anregung der ersten symmetrischen Schwingungsmode und der ersten antisymmetrischen Schwingungsmode ermöglicht, ohne den normalen Messbetrieb, der auf Basis der ersten symmetrischen Schwingungsmode erfolgt, zu beeinträchtigen.

Die Aufgabe wird erfindungsgemäß gelöst durch den vibronischen Messaufnehmer gemäß dem unabhängigen Patentanspruch 1.

Der erfindungsgemäße Messaufnehmer umfasst:
einen Oszillator mit mindestens einem Messrohr zum Führen eines Mediums;
nur eine Erregeranordnung zum Anregen des Oszillators zu Biegeschwingungen des mindestens einen Messrohrs;
mindestens eine einlaufseitige Sensoranordnung zum Erfassen der Biegeschwingungen des mindestens einen Messrohrs; und
mindestens eine auslaufseitige Sensoranordnung zum Erfassen der Biegeschwingungen des mindestens einen Messrohrs; und
eine Mess- und Betriebsschaltung, welche dazu eingerichtet ist, die Erregeranordnung mit einem Erregersignal zu beaufschlagen, und Sensorsignale der einlaufseitigen und auslaufseitigen Sensoranordnungen zu erfassen, und auf Basis der Sensorsignale einen Dichtemesswert und/oder einen Massedurchflussratenmesswert zu ermitteln,
wobei die Erregeranordnung eine erste Erregerbaugruppe aufweist, die an dem mindestens einen Messrohr befestigt ist, und eine zweite Erregerbaugruppe, bezüglich der das mindestens eine Messrohr zum Schwingen anzuregen ist, wobei die erste Erregerbaugruppe einen Schwerpunkt aufweist, der bis auf Fertigungstoleranzen in einer Messrohrquerebene liegt, welche senkrecht zu dem mindestens einen Messrohr verläuft, und bezüglich welcher das mindestens eine Messrohr einen im Wesentlichen spiegelsymmetrischen Verlauf aufweist; wobei die Erregeranordnung einen elektrodynamischen Erreger und eine Ausgleichsmasse umfasst, wobei der elektrodynamische Erreger dazu eingerichtet ist, eine Erregerkraft auf das mindesten eine Messrohr auszuüben, die zwischen der ersten und der zweiten Erregerbaugruppe wirkt, wobei ein effektives Zentrum der Erregerkraft außerhalb der Messrohrquerebene lokalisiert ist,
wobei die zweite Erregerbaugruppe eine Spule umfasst, die dazu eingerichtet ist, ein alternierendes Magnetfeld zu erzeugen, mit dem der Magnet wechselwirkt, um die Schwingungen des Messrohrs anzuregen,
wobei die erste Erregerbaugruppe einen Trägerkörper aufweis, an welchem der Magnet und die Ausgleichsmasse angeordnet sind, wobei der Trägerkörper symmetrisch bezüglich der Messrohrquerebene ausgebildet ist, und
wobei die erste Erregerbaugruppe mittels einer Fügestelle an dem mindestens einen Messrohr befestigt ist, und wobei die Messrohrquerebene, durch die Fügestelle verläuft.

In einer Weiterbildung der Erfindung weist das mindestens eine Messrohr eine freie Schwingungslänge auf, die sich zwischen einer einlaufseitigen Fixierung des Messrohrs und einer auslaufseitigen Fixierung des Messrohrs erstreckt, wobei das Zentrum der Erregerkraft nicht weniger als 0,5% der freien Schwingungslänge, insbesondere nicht mehr als 1% der freien Schwingungslänge, und nicht mehr als 10%, der freien Schwingungslänge, insbesondere nicht mehr als 5% von der Messrohrquerebene beabstandet ist.

Das Zentrum der Erregerkraft liegt bei einem Erreger, der eine koaxiale Anordnung eines rotationssymmetrischen Magneten mit einer rotationssymmetrischen Spule aufweist, auf der gemeinsamen Achse der Rotationssymmetrie. Bei anderen Gestaltungen ist für einen elektromagnetischen Erreger das Zentrum der Erregerkraft als Schwerpunkt des Integrals der Kraftdichte zwischen Magnet und Spule zu ermitteln.

In einer Weiterbildung der Erfindung verläuft eine Hauptträgheitsachse der ersten Erregerbaugruppe in der Messrohrquerebene, wobei diese Hauptträgheitsachse insbesondere senkrecht zur Schwingungsrichtung des Messrohrs in der Messrohrquerebene verläuft. Dies bedingt, dass sich die exzentrische Anordnung des Erregers, zwar auf die Erregerkräfte auswirkt, aber keine trägheitsbedingten Drehimpulse in das schwingende erste Messrohr einleitet.

Mit der Befestigung der Erregerbaugruppe in der Messrohrmitte können für erfindungsgemäße Messaufnehmer letztlich die gleichen Positionier- und Befestigungsverfahren verwendet werden, wie für Messaufnehmer nach dem Stand der Technik mit rein symmetrischer Anregung. Die exzentrische Anregung wird durch die besondere Gestaltung der Baugruppen der Erregeranordnung ermöglicht.

Gemäß einer Weiterbildung der Erfindung sind die Sensoranordnungen, jeweils als elektrodynamische Sensoranordnungen mit einer Spule und einem Magneten ausgebildet.

Gemäß einer Weiterbildung der Erfindung weist der Oszillator weiterhin ein zweites Messrohr auf, wobei das erste Messrohr und das zweite Messrohr bezüglich einer Messaufnehmerlängsebene spiegelsymmetrisch zueinander verlaufen, wobei die Messaufnehmerlängsebene senkrecht zur Messrohrquerebene verläuft. Die freie Schwinungslänge ist in diesem Fall beispielsweise durch Kopplerplatten definiert, mit denen die beiden Messrohre einlaufseitig und auslaufseitig verbunden sind.

Gemäß einer Weiterbildung der Erfindung ist die zweite Erregerbaugruppe an dem zweiten Messrohr gegenüber der ersten Erregerbaugruppe befestigt ist, wobei der Schwerpunkt der zweiten Erregerbaugruppe bis auf Fertigungstoleranzen in der Messrohrquerebene liegt.

Gemäß einer Weiterbildung der Erfindung verläuft eine Hauptträgheitsachse der zweiten Erregerbaugruppe in der Messrohrquerebene, wobei diese Hauptträgheitsachse insbesondere senkrecht zur Schwingungsrichtung des zweiten Messrohrs in der Messrohrquerebene verläuft. Dies bedingt, dass sich die exzentrische Anordnung des Erregers, zwar auf die Erregerkräfte auswirkt, aber keine trägheitsbedingten Drehimpulse in das schwingende zweite Messrohr einleitet.

Gemäß einer Weiterbildung der Erfindung umfasst das Erregersignal ein periodisches Signal mit der Eigenfrequenz einer symmetrischen Schwingungsmode des mindesten einen Messrohrs und/oder der Eigenfrequenz einer antisymmetrischen Schwingungsmode des mindestens einen Messrohrs.

Gemäß einer Weiterbildung der Erfindung ist die Mess- und Betriebsschaltung dazu eingerichtet, die erste symmetrische Schwingungsmode und die erste antisymmetrische Schwingungsmode anzuregen, die Eigenfrequenzen der ersten symmetrischen Schwingungsmode und der ersten antisymmetrischen Schwingungsmode auf Basis der Eigenfrequenzen der ersten symmetrischen Schwingungsmode und der ersten antisymmetrischen Schwingungsmode einen Dichtemesswert oder Massedurchflussmesswert für ein in dem Messrohr geführtes Medium zu ermitteln, wobei der Dichtemesswert bzw. der Massedurchflussmesswert hinsichtlich eines Resonatoreffekts, aufgrund einer Gasbeladung des Mediums korrigiert ist.

Da die erste antisymmetrischen Schwingungsmode im Regelfall eine deutlich tiefere Eigenfrequenz aufweist als die zweite symmetrische Schwingungsmode, kann mit der beschriebenen Vorgehensweise der Einfluss der Gasbeladung auch noch für solche Gaskonzentrationen bestimmt werden, in denen die zweite symmetrische Mode aufgrund des Resonatoreffekts nicht mehr verlässlich angeregt werden kann.

Die Erfindung wird nun anhand der in den Zeichnungen dargestellten Ausführungsbeispiele näher erläutert.

Es zeigt:
Fig. 1a: eine Darstellung eines Ausführungsbeispiels eines erfindungsgemäßen Messaufnehmers;
Fig. 1b:eine schematische Seitenansicht einer ersten Erregerbaugruppe des Messaufnehmers aus Fig. 1a;
Fig. 1c: eine schematische Seitenansicht einer zweiten Erregerbaugruppe des Messaufnehmers aus Fig. 1a;
Fig. 2: ein Diagramm zu den Schwingungsmoden eines Messaufnehmers;
Fig. 3: ein Flussdiagramm zur Bestimmung der Dichte eines kompressiblen Mediums mit dem erfindungsgemäßen Messaufnehmer;
Fig. 4: Messdaten zur Dichtemessung mit dem erfindungsgemäßen Messaufnehmer; und
Fig. 5: Messdaten zur Massedurchflussmessung mit dem erfindungsgemäßen Messaufnehmer.

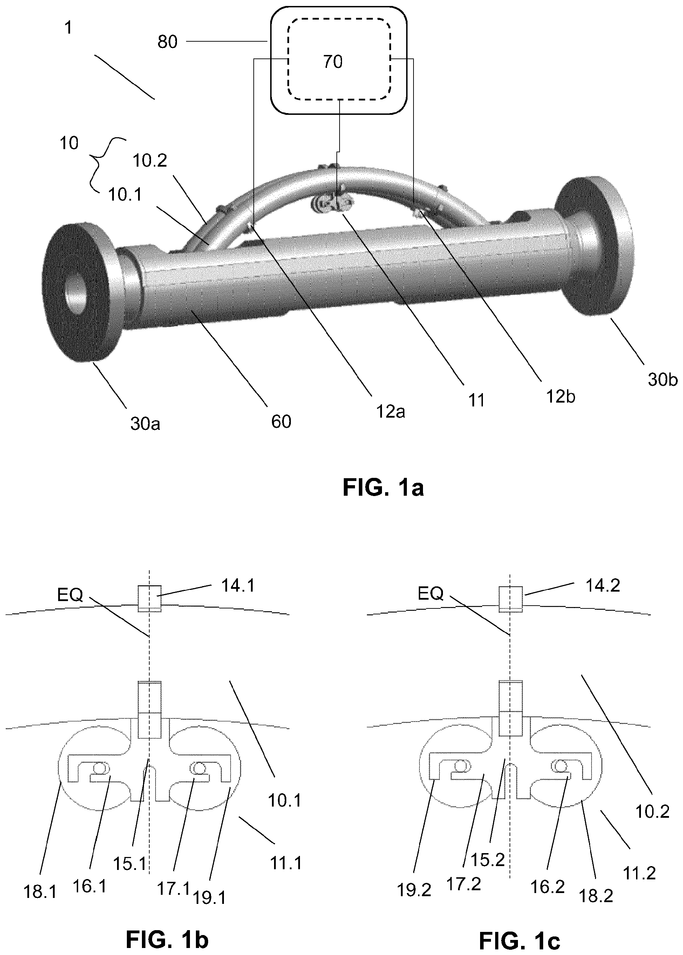

Der in Fig. 1a dargestellte Messaufnehmer 1 zum Messen von Massedurchfluss und Dichte umfasst einen Oszillator 10 mit zwei im Wesentlichen parallel verlaufenden, gebogenen Messrohren 10.1, 10.2 sowie eine Erregeranordnung 11, die zwischen den Messrohren 10 wirkt, um diese zu Biegeschwingungen gegeneinander anzuregen. Die Erregeranordnung 11 ist so an den Messrohren 10.1, 10.2 befestigt, dass das Zentrum einer von ihr erzeugten Erregerkraft außerhalb einer Messrohrquerebene liegt, welche die Messrohre senkrecht schneidet, und bezüglich welcher jedes der Messrohre einen spiegelsymmetrischen Verlauf aufweist. Das Zentrum der Erregerkraft ist in Längsrichtung der Messrohre im Ausführungsbeispiel um etwa 2,5% der Länge L der Messrohre 10.1, 10.2 beabstandet zur Messrohrquerebene lokalisiert. Damit wirkt bei der Anregung des Oszillators mittels der Erregeranordnung 11 eine ausreichende asymmetrische Erregerkraftkomponente, um auch die erste antisymmetrischen Schwingungsmode, die so genannte f2-Mode, zu Resonanzschwingungen anregen zu können, wenn die Anregung des Oszillators 10 mit einer Resonanzfrequenz f2 der ersten antisymmetrischen Schwingungsmode erfolgt. Weiterhin weist der Messaufnehmer 1 zwei Sensoranordnungen 12a, 12b auf, welche symmetrisch, zur Messrohrquerebene angeordnet sind, um die Messrohrschwingungen als Relativbewegung der gegeneinander schwingenden Messrohre 10.1, 10.2 zu erfassen. Die Messrohre 10.1, 10.2 erstrecken sich zwischen zwei (nicht dargestellten) Strömungsteilern, welche die Messrohre 10.1, 10.2 strömungstechnisch zusammenfassen und jeweils mit einem Flansch 30a, 30b verbunden sind, der zum Einbau des Messaufnehmers 1 in eine Rohrleitung dient. Zwischen den Strömungsteilern erstreckt sich ein starres Trägerrohr 60, welches die Strömungsteiler miteinander verbindet, um Schwingungen der Strömungsteiler gegeneinander im Frequenzbereich der Biegeschwingungsmoden des Oszillators 10 gegeneinander zu unterdrücken. Das Trägerrohr 60 trägt weiterhin ein hier nur schematisch dargestelltes Elektronikgehäuse 80, in welchem ein Mess- und Betriebsschaltung 70 enthalten ist, welche dazu eingerichtet ist den Messaufnehmer zu betreiben.

Der Erregeranordnung 11 und die Sensoranordnungen 12a, 12b weisen, wie üblich elektrodynamische Wandler auf, wobei an einem der Messrohre jeweils ein Magnet angeordnet ist und an dem anderen eine Spule. Dies Prinzip ist an sich bekannt und braucht hier nicht näher erläutert zu werden. Die Besonderheit des erfindungsgemäßen Messaufnehmers liegt darin, dass die Erregeranordnung 11 neben der Anregung symmetrischer Biegeschwingungsmoden auch eine Anregung antisymmetrischer Biegeschwingungsmoden des Oszillators ermöglicht und dennoch hinsichtlich ihrer Masseverteilung ausbalanciert ist. Die Erregeranordnung 11 umfasst dazu eine erste Erregerbaugruppe 11.1 an einem ersten Messrohr 10.1, wie in Fig. 1b dargestellt ist, und eine zweite Erregerbaugruppe 11.2, die der ersten Erregerbaugruppe 11.1 gegenüberliegend an einem zweiten Messrohr 10.2 angeordnet ist, wie Fig. 1c zeigt.

Die in Fig. 1b dargestellte erste Erregerbaugruppe 11.1 umfasst ein erstes Ringsegment 14.1 welches das erste Messrohr 10.1 symmetrisch zur Messrohrquerebene teilweise umgreift und mit dem ersten Messrohr 10.1 stoffschlüssig gefügt ist, beispielsweise durch Hartlöten. Das erste Ringsegment 14.1 hält einen insbesondere planaren ersten Trägerkörper 15.1, der im Wesentlichen senkrecht zur Messrohrquerebene verläuft, und symmetrisch zur Messrohrquerebene gestaltet ist. Der erste Trägerkörper 15.1 weist einen geschlitzten ersten Erregerkomponententräger 16.1 und einen geschlitzten ersten Ausgleichsmassenträger 17.1 auf. Der erste Erregerkomponententräger 16.1 trägt eine Erregermagnetkomponente 18.1, die mittels eines Zapfens, der in einem Schlitz des ersten Erregerkomponententrägers 16.1 eingreift, positioniert und beispielsweise durch Löten, Kleben oder Schrauben an letzterem fixiert ist. Der erste Ausgleichsmassenträger 17.1 trägt einen Ausgleichsmassenkörper 19.1, der mittels eines Zapfens, der in einem Schlitz des ersten Ausgleichsmassenträgers 17.1 eingreift, positioniert und beispielsweise durch Löten, Kleben oder Schrauben an letzterem fixiert ist. Der erste Ausgleichsmassenkörper 19.1 ist so auf die Masse der Erregermagnetkomponente 18.1 abgestimmt, dass der gemeinsame Schwerpunkt in der Messrohrquerebene liegt. Insbesondere weisen der erste Ausgleichsmassenkörper 19.1 und die Erregermagnetkomponente 18.1 die gleiche Masse auf. Eine Hauptträgheitsachse der ersten Erregerbaugruppe 11.1 verläuft in der Messrohrquerebene.

Die in Fig. 1c dargestellte zweite Erregerbaugruppe 11.2 umfasst ein zweites Ringsegment 14.2 welches das zweite Messrohr 10.2 symmetrisch zur Messrohrquerebene teilweise umgreift und mit dem zweiten Messrohr 10.2 stoffschlüssig gefügt ist, beispielsweise durch Hartlöten. Das zweite Ringsegment 14.2 hält einen insbesondere planaren zweiten Trägerkörper 15.2, der im Wesentlichen senkrecht zur Messrohrquerebene verläuft, und symmetrisch zur Messrohrquerebene gestaltet ist. Der zweite Trägerkörper 15.2 weist einen geschlitzten zweiten Erregerkomponententräger 16.2 und einen geschlitzten zweiten Ausgleichsmassenträger 17.2 auf. Der zweite Erregerkomponententräger 16.2 trägt eine Erregerspulenkomponente 18.2, die mittels eines Zapfens, der in einem Schlitz des zweiten Erregerkomponententrägers 16.2 eingreift, positioniert und beispielsweise durch Löten, Kleben oder Schrauben an letzterem fixiert ist. Die Erregerspulenkomponente 18.2 und die Erregermagnetkomponente 18.1 sind bezogen auf die Längsrichtung der Messrohre miteinander fluchtend ausgerichtet. Der zweite Ausgleichsmassenträger 17.2 trägt einen Ausgleichsmassenkörper 19.1, der mittels eines Zapfens, der in einem Schlitz des zweiten Ausgleichsmassenträgers 17.2 eingreift, positioniert und beispielsweise durch Löten, Kleben oder Schrauben an letzterem fixiert ist. Der zweite Ausgleichsmassenkörper 19.2 ist so auf die Masse der Erregerspulenkomponente 18.2 abgestimmt, dass der gemeinsame Schwerpunkt in der Messrohrquerebene liegt. Insbesondere weisen der zweite Ausgleichsmassenkörper 19.2 und die Erregerspulenkomponente 18.2 die gleiche Masse auf. Eine Hauptträgheitsachse der zweiten Erregerbaugruppe 11.2 verläuft in der Messrohrquerebene. Das zweite Ringsegment 14.2 ist insbesondere baugleich mit dem ersten Ringsegment 14.1 und der zweite Trägerkörper 15.2 ist insbesondere baugleich mit dem ersten Trägerkörper 15.1.

Die Hauptträgheitsachsen der ersten Erregerbaugruppe 11.1 und der zweiten Erregerbaugruppe 11.2 in der Messrohrquerebene verlaufen parallel zueinander und insbesondere spiegelsymmetrisch zueinander bezüglich einer Messaufnehmerlängsebene die zwischen den beiden Messrohren 10.1, 10.2 verläuft, wobei die beiden Messrohre bezüglich der Messaufnehmerlängsebene zueinander spiegelsymmetrisch angeordnet sind.

Die Erregerspulenkomponente 18.2 ist dazu eingerichtet, von der Mess- und Betriebsschaltung 70 mit einem Wechselstromsignal gespeist zu werden, dessen Frequenz der momentanen Eigenfrequenz einer anzuregenden Biegeschwingungsmode entspricht. Selbstverständlich können auch Wechselstromsignale verschiedener Frequenzen überlagert werde, beispielsweis mit den momentanen Eigenfrequenzen der ersten symmetrischen und der ersten antisymmetrischen Biegeschwingungsmode. Das resultierende Magnetfeld bewirkt alternierend eine anziehende und abstoßende Kraft auf die Erregermagnetkomponente 18.1, wodurch die beiden Messrohre 10.1, 10.2 des Oszillators gegeneinander in Schwingungen versetzt werden.

Die Erregermagnetkomponente 18.1, die Erregerspulenkomponente 18.2, sowie die beiden Ausgleichsmassenkörper 19.1, 19.2 sind vorzugsweise rotationssymmetrisch gestaltet, wobei die Rotationsachse im Wesentlichen in Richtung der Schwingungen der Messrohre verläuft. Insbesondere weisen die Erregermagnetkomponente 18.1, die Erregerspulenkomponente 18.2, sowie die beiden Ausgleichsmassenkörper 19.1, 19.2 zumindest abschnittsweise ein Zylindersymmetrie auf.

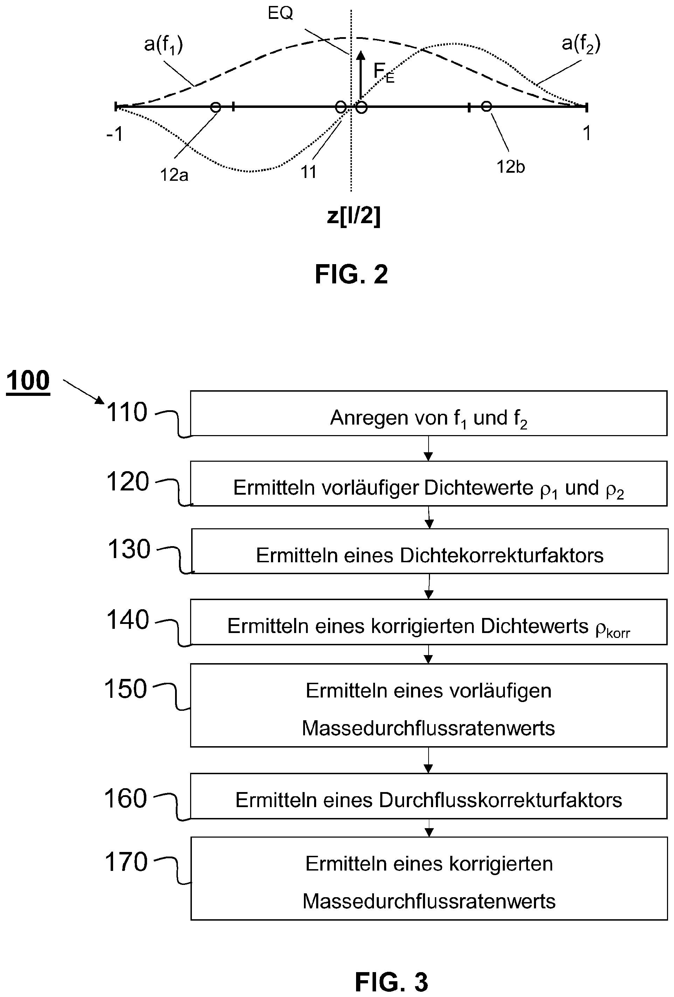

Die modenabhängige Auslenkung eines Messrohrs ist in Fig. 2 schematisch dargestellt. Hierbei zeigt die Kurve a(f₁) die Biegelinie eines Messrohrs für die erste symmetrische Schwingungsmode, die auch Antriebsmode oder f₁-Mode genannt wird. Die Kurve a(f₂) zeigt die Biegelinie des Messrohrs für die erste antisymmetrische Schwingungsmode, in der das Messrohr durch die Corioliskräfte ausgelenkt wird, wenn durch das mit der ersten symmetrischen Schwingungsmode schwingende Messrohr ein Massestrom fließt. Die erste antisymmetrische Schwingungsmode weist in Längsrichtung des Messrohrs in der Rohrmitte bei z=0 einen Schwingungsknoten auf. Ein Erreger an dieser Position wäre nicht in der Lage eine Schwingung der ersten antisymmetrischen Schwingungsmode anzuregen. Daher ist die Erregeranordnung 11 hier so positioniert, dass die Erregerkraft F_{E} um etwa um 2,5% der Messrohrlänge also etwa 5% der halben Messrohrlänge gegenüber der Messrohrquerebene versetzt zwischen den Messrohren wirkt. Die Messrohrlänge ist hierbei die Länge einer dem gebogenen Verlauf eines Messrohrs folgenden Messrohrmittenlinie zwischen dem einlaufseitigem und dem auslaufseitigen Strömungsteiler, in denen die Messrohre 10 mit ihren Enden fixiert sind. In der versetzten Position kann der Erreger die erste antisymmetrische Schwingungsmode anregen, wenn er eine Erregerkraft F_{E} mit der Resonanzfrequenz der ersten antisymmetrischen Schwingungsmode aufprägt.

Die Positionen der Sensoranordnungen 12a, 12b sind in Längsrichtung z symmetrisch zur Messrohrmitte der Messrohre so gewählt, dass Auslenkungen der Schwingungssensoren sowohl bei Schwingungen in der Antriebsmode als auch der ersten antisymmetrischen Schwingungsmode ein ausreichendes Messsignal bewirken.

Die Mess- und Betriebsschaltung ist dazu eingerichtet, die erste symmetrische Schwingungsmode und die erste antisymmetrische Schwingungsmode anzuregen, die Eigenfrequenzen der ersten symmetrischen Schwingungsmode und der ersten antisymmetrischen Schwingungsmode auf Basis der Eigenfrequenzen der ersten symmetrischen Schwingungsmode und der ersten antisymmetrischen Schwingungsmode einen Dichtemesswert oder Massedurchflussmesswert für ein in dem Messrohr geführtes Medium zu ermitteln, wobei der Dichtemesswert bzw. der Massedurchflussmesswert hinsichtlich eines Resonatoreffekts, aufgrund einer Gasbeladung des Mediums korrigiert ist. Der Einfluss dieses so genannten Resonatoreffekts kann durch Erfassen der Eigenfrequenzen zweier Schwingungsmoden korrigiert werden, wobei im Wesentlichen eine Schallgeschwindigkeit des Mediums ermittelt wird, für die sich aus den beiden Eigenfrequenzen übereinstimmende Dichtemesswerte für das Medium ergeben. Einzelheiten dazu sind beispielsweise in DE 10 2015 122 661 A1 offenbart, wobei nach der dort beschriebenen Lehre die erste und zweite symmetrische Schwingungsmode auszuwerten sind. Anhand von Fig. 3 wird nun das Verfahren 100 erläutert, zu dessen Durchführung die Mess- und Betriebsschaltung eingerichtet ist. In einem ersten Schritt 110 werden die erste symmetrische und die erste antisymmetrische Schwingungsmode angeregt, also die f₁ Mode und die f₂ Mode. In einem zweiten Schritt 120 wird auf Basis der Eigenfrequenzen der angeregten Moden jeweils ein vorläufiger Dichtemesswert ρ₁, ρ₂, ermittelt. Bei inkompressiblen Medien stimmen die beiden Dichtemesswert im Wesentlichen überein. Wenn Abweichungen gegeben sind, wird im nächsten Schritt 130 ein Korrekturfaktor bestimmt, der von der Schallgeschwindigkeit des kompressiblen Mediums abhängt. Dem entsprechend wird, wie in DE 10 2015 122 661 A1 offenbart, zunächst die Schallgeschwindigkeit ermittelt, die zu dem beobachteten Verhältnis der vorläufigen Dichtemesswerte führt. Auf Basis der Schallgeschwindigkeit, und einer der Eigenfrequenzen kann dann ein Dichtefehler und ein Korrekturfaktor ermittelt werden, mit dem dann im nächsten Schritt 140 ein korrigierter Dichtemesswert ρₖₒᵣᵣ bestimmt wird.

Zur Bereitstellung eines korrekten Massedurchflussratenmesswerts wird zunächst ein vorläufiger Massedurchflussratenmesswert bestimmt 150. In einem nächsten Schritt 160 wird auf Basis des Dichtefehlers bzw. Dichtekorrekturfaktors ein Durchflusskorrekturfaktor ermitteln, wie ebenfalls in DE 10 2015 122 661 A1 offenbart ist. In einem letzten Schritt 170 wird ein korrekter Massedurchflussratenmesswert ermittelt, in dem der vorläufige Massedurchflussratenmesswert mit dem Korrekturfaktor korrigiert wird.

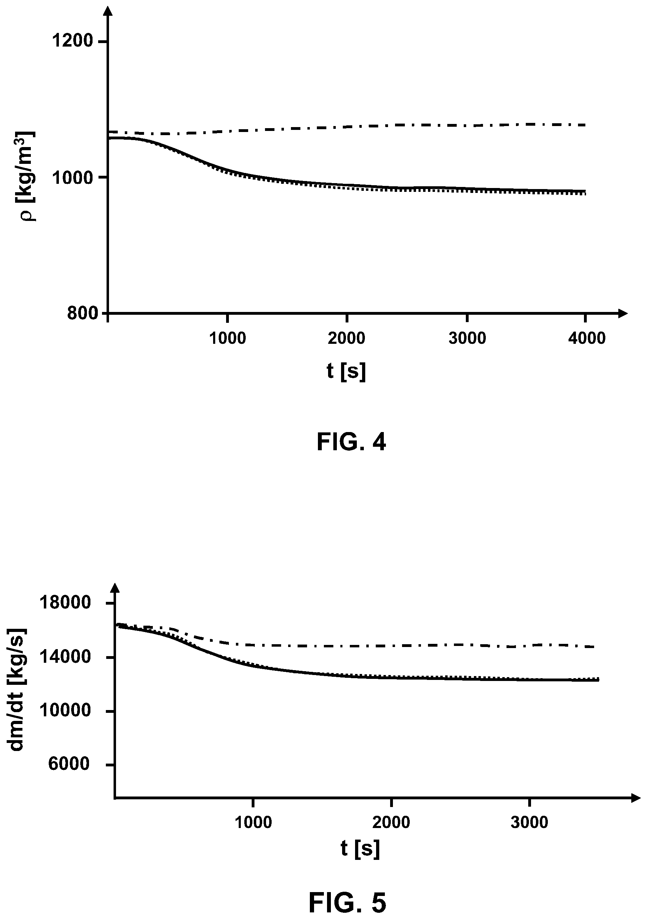

Der Effekt der Korrekturfunktion ergibt sich aus den Daten in Fign. 4 und 5, welche Messergebnisse von Dichte- und Massedurchflussmessungen mit dem erfindungsgemäßen Messaufnehmer zeigen, wobei während der Messung die Gasbeladung eines den Messaufnehmer durchströmenden flüssigen Mediums langsam gesteigert wurde.

Die strichpunktierte Kurve in Fig 4, zeigt unkorrigierte Dichtemesswerte auf Basis der Eigenfrequenz der ersten symmetrischen Biegeschwingungsmode also der f₁-Mode, diese entsprechen auch einem der vorläufigen Dichtemesswerte gemäß Schritt 120 im obigen Verfahren. Die durchgezogene Linie zeigt dagegen den tatsächlichen Verlauf der Dichtewerte. Die punktierte Linie zeigt den Verlauf der korrigierten Dichtemesswerte nach Schritt 140 auf Basis der ersten symmetrischen und der ersten antisymmetrischen Biegeschwingungsmode. Die Verbesserung ist offensichtlich und die Übereinstimmung mit den tatsächlichen Dichtewerten ist zufriedenstellend.

Die strichpunktierte Kurve in Fig 5, zeigt unkorrigierte Durchflussratenmesswerte. Die durchgezogene Linie zeigt dagegen den tatsächlichen Verlauf der Durchflussrate. Die punktierte Linie gibt den Verlauf der korrigierten Durchflussratenmesswerte gemäß Schritt 170 des obigen Verfahrens auf Basis der ersten symmetrischen und der ersten antisymmetrischen Biegeschwingungsmode. Auch hier ist die Verbesserung offensichtlich, und die Übereinstimmung mit den tatsächlichen Durchflussratenmesswerten ist zufriedenstellend.

Insofern, als der eine exzentrisch angeordnete Erreger anteilig auch eine Auslenkung in der Eigenform der ersten antisymmetrischen Schwingungsmode bei der Frequenz der ersten symmetrischen Schwingungsmode bewirkt, und diese Auslenkung auch durch Durchflussabhängige Corioliskräfte verursacht sein könnte, bewirkt der Erreger einen Nullpunktfehler bei der Durchflussmessung, der aber gut zu korrigieren ist, da die Anregung der ersten symmetrischen Schwingungsmode und der ersten antisymmetrischen Schwingungsmode stets mit der gleichen Erregerkraft bei einer konstanten Erregerposition erfolgen. Mittels einer intermittierenden Durchflussmessung während einer abklingenden Erregerschwingung im Vergleich zu einer Durchflussmessung bei laufendem Erreger kann dieser Nullpunktfehler bestimmt und korrigiert werden.

## Patentansprüche

1. Messaufnehmer (1), umfassend:
einen Oszillator (10) mit mindestens einem Messrohr (10.1, 10,2) zum Führen eines Mediums;
nur eine Erregeranordnung (11) zum Anregen des Oszillators (10) zu Biegeschwingungen des mindestens einen Messrohrs (10.1, 10,2);
mindestens eine einlaufseitige Sensoranordnung (12a) zum Erfassen der Biegeschwingungen des mindestens einen Messrohrs (10.1, 10,2); und
mindestens eine auslaufseitige Sensoranordnung (12b) zum Erfassen der Biegeschwingungen des mindestens einen Messrohrs; und
eine Mess- und Betriebsschaltung (70), welche dazu eingerichtet ist, die Erregeranordnung (11) mit einem Erregersignal zu beaufschlagen, und Sensorsignale der einlaufseitigen und auslaufseitigen Sensoranordnungen (12a, 12b) zu erfassen, und auf Basis der Sensorsignale einen Dichtemesswert und/oder einen Massedurchflussratenmesswert zu ermitteln,
wobei die Erregeranordnung eine erste Erregerbaugruppe (11.1) aufweist, die an dem mindestens einen Messrohr (10.1) befestigt ist, und eine zweite Erregerbaugruppe (11.2), bezüglich der das mindestens eine Messrohr zum Schwingen anzuregen ist, wobei die erste Erregerbaugruppe (11.1) einen Schwerpunkt aufweist, der bis auf Fertigungstoleranzen in einer Messrohrquerebene (EQ) liegt, welche senkrecht zu dem mindestens einen Messrohr (10.1, 10.2) verläuft, und bezüglich welcher das mindestens eine Messrohr (10.1, 10.2) einen im Wesentlichen spiegelsymmetrischen Verlauf aufweist;
wobei die Erregeranordnung (11) einen elektrodynamischen Erreger (18) und mindestens einen Ausgleichsmassenkörper (19.1, 19.2) umfasst, wobei der elektrodynamische Erreger dazu eingerichtet ist, eine Erregerkraft (FE) auf das mindesten eine Messrohr (10.1, 10.2) auszuüben, die zwischen der ersten und der zweiten Erregerbaugruppe (11.1, 11.2) wirkt, wobei ein effektives Zentrum der Erregerkraft außerhalb der Messrohrquerebene (EQ) lokalisiert ist,
wobei die erste Erregerbaugruppe (11.1) einen Magneten umfasst, wobei die zweite Erregerbaugruppe (11.2) eine Spule (18.2) umfasst, die dazu eingerichtet ist, ein alternierendes Magnetfeld zu erzeugen, mit dem der Magnet (18.1) wechselwirkt, um die Schwingungen des Messrohrs (10.1, 10.2) anzuregen;
**dadurch gekennzeichnet, dass** die erste Erregerbaugruppe (11.1) einen Trägerkörper (15.1) aufweist, an welchem der Magnet (18.1) und die Ausgleichsmasse (18.2) angeordnet sind, wobei der Trägerkörper (15.1) symmetrisch bezüglich der Messrohrquerebene (EQ) ausgebildet ist; und
die erste Erregerbaugruppe (11.1) mittels einer Fügestelle an dem mindestens einen Messrohr (10.1) befestigt ist, wobei die Messrohrquerebene (EQ), durch die Fügestelle verläuft.

2. Messaufnehmer (1) nach Anspruch 1, wobei das mindestens eine Messrohr (10.1, 10.2) eine freie Schwingungslänge aufweist, die sich zwischen einer einlaufseitigen Fixierung des Messrohrs und einer auslaufseitigen Fixierung des Messrohrs (10.1, 10.2) erstreckt, wobei das Zentrum der Erregerkraft nicht weniger als 0,5% der freien Schwingungslänge und nicht mehr als 10% der freien Schwingungslänge von der Messrohrquerebene (EQ) beabstandet ist.

3. Messaufnehmer (1) nach einem der vorhergehenden Ansprüche, wobei eine Hauptträgheitsachse der ersten Erregerbaugruppe (11.1) in der Messrohrquerebene (EQ) verläuft.

4. Messaufnehmer (1) nach einem der vorhergehenden Ansprüche wobei die Sensoranordnungen (12a, 12b), jeweils als elektrodynamische Sensoranordnungen ausgebildet sind.

5. Messaufnehmer (1) nach einem der vorhergehenden Ansprüche, wobei der Oszillator (10) weiterhin ein zweites Messrohr (10.2) aufweist, wobei das erste Messrohr (10.1) und das zweite Messrohr (10.2) bezüglich einer Messaufnehmerlängsebene spiegelsymmetrisch zueinander verlaufen, wobei die Messaufnehmerlängsebene senkrecht zur Messrohrquerebene (EQ) verläuft.

6. Messaufnehmer (1) nach Anspruch 5, wobei die zweite Erregerbaugruppe (11.2) an dem zweiten Messrohr (10.2) gegenüber der ersten Erregerbaugruppe (11.1) befestigt ist, wobei der Schwerpunkt der zweiten Erregerbaugruppe (11.2) bis auf Fertigungstoleranzen in der Messrohrquerebene (EQ) liegt.

7. Messaufnehmer (1) nach Anspruch 5 oder 6 wobei eine Hauptträgheitsachse der zweiten Erregerbaugruppe (11.2) in der Messrohrquerebene (EQ) verläuft.

8. Messaufnehmer (1) nach einem der vorhergehenden Ansprüche, wobei das Erregersignal ein periodisches Signal mit der Eigenfrequenz einer symmetrischen Schwingungsmode des mindesten einen Messrohrs und/oder der Eigenfrequenz einer antisymmetrischen Schwingungsmode des mindestens einen Messrohrs (10.1, 10.2) umfasst.

9. Messaufnehmer (1) nach einem der vorhergehenden Ansprüche, wobei die Mess- und Betriebsschaltung (70) dazu eingerichtet ist, die erste symmetrische Schwingungsmode und die erste antisymmetrische Schwingungsmode anzuregen, die Eigenfrequenzen der ersten symmetrischen Schwingungsmode und der ersten antisymmetrischen Schwingungsmode auf Basis der Eigenfrequenzen der ersten symmetrischen Schwingungsmode und der ersten antisymmetrischen Schwingungsmode einen Dichtemesswert oder Massedurchflussmesswert für ein in dem Messrohr geführtes Medium zu ermitteln, wobei der Dichtemesswert bzw. der Massedurchflussmesswert hinsichtlich eines Resonatoreffekts, aufgrund einer Gasbeladung des Mediums korrigiert ist.

## Claims

1. Measuring sensor (1), comprising:
an oscillator (10) with at least one measuring tube (10.1, 10,2) for guiding a medium;
only one exciter arrangement (11) for exciting the oscillator (10) to bending oscillations of the at least one measuring tube (10.1, 10, 2);
at least one sensor arrangement (12a) on the inlet side for detecting the bending vibrations of the at least one measuring tube (10.1, 10, 2); and
at least one sensor arrangement (12b) on the outlet side for detecting the Bending vibrations of the at least one measuring tube; and
a measuring and operating circuit (70) which set up to control the exciter arrangement (11) with an excitation signal, and to detect sensor signals from the inlet-side and outlet-side sensor arrangements (12a, 12b), and to determine a measured density value and/or a measured mass flow rate value on the basis of the sensor signals,
the exciter arrangement having a first exciter assembly (11.1), which is fastened to the at least one measuring tube (10.1), and a second exciter assembly (11.2), with respect to which the at least one measuring tube is to be excited to oscillate, the first exciter assembly (11.1) having a center of gravity which, apart from manufacturing tolerances, lies in a measuring tube transverse plane (EQ) which extends perpendicularly to the at least one measuring tube (10.1, 10.2), and with respect to the second exciter assembly (11.2) the at least one measuring tube (10.1, 10.2) is to be excited to oscillate.
in which the at least one measuring tube (10.1, 10.2) has a substantially mirror-symmetrical course;
wherein the exciter arrangement (11) comprises an electrodynamic exciter (18) and at least one equalizing mass body (19.1, 19.2), wherein the electrodynamic exciter is arranged to exert an excitation force (FE) on the at least one measuring tube (10.1, 10.2), the between the first and second exciter assemblies (11.1, 11.2), whereby an effective center of the excitation force is located outside the transverse plane of the measuring tube (EQ),
wherein the first exciter assembly (11.1) comprises a magnet, the second exciter assembly (11.2) comprising a coil (18.2) arranged to generate an alternating magnetic field with which the magnet (18.1) interacts to generate the oscillations of the first exciter assembly (11.1). measuring tube (10.1, 10.2);
**characterized in that** the first exciter assembly (11.1) has a carrier body (15.1) on which the magnet (18.1) and the compensating mass (18.2) are arranged, the carrier body (15.1) being designed symmetrically with respect to the transverse plane (EQ) of the measuring tube; and
the first exciter assembly (11.1) by means of a joint at the at least one measuring tube (10.1) is attached, with the transverse plane of the measuring tube (EQ) running through the joint.

2. Measuring sensor (1) according to claim 1, wherein the at least one measuring tube (10.1, 10.2) has a free oscillation length which extends between an inlet-side fixation of the measuring tube and an outlet-side fixation of the measuring tube (10.1, 10.2), wherein the
center of the excitation force is not less than 0.5% of the free oscillation length and not more than 10% of the free oscillation length away from the transverse plane of the measuring tube (EQ).

3. Measuring sensor (1) according to one of the preceding claims, wherein a main axis of inertia of the first exciter assembly (11.1) extends in the transverse plane (EQ) of the measuring tube.

4. Measuring sensor (1) according to one of the preceding claims, wherein the sensor arrangements (12a, 12b) are each designed as electrodynamic sensor arrangements.

5. Measuring transducer (1) according to one of the preceding claims, wherein the oscillator (10) further comprises a second measuring tube (10.2), wherein the first measuring tube (10.1) and the second measuring tube (10.2) extend mirror-symmetrically to one another with respect to a longitudinal plane of the measuring sensor, wherein the longitudinal plane of the measuring sensor extends perpendicular to the transverse plane (EQ) of the measuring tube.

6. Measuring sensor (1) according to claim 5, wherein the second exciter assembly (11.2) is connected to the second measuring tube (10.2) is fixed opposite the first exciter assembly (11.1), with the center of gravity of the second exciter assembly (11.2) lying in the measuring tube transverse plane (EQ) except for manufacturing tolerances.

7. Measuring sensor (1) according to claim 5 or 6, wherein a main axis of inertia of the second exciter assembly (11.2) extends in the transverse plane (EQ) of the measuring tube.

8. Measuring transducer (1) according to one of the preceding claims, wherein the energizing signal comprises a periodic signal with the natural frequency of a symmetrical oscillation mode of the at least one measuring tube and/or the natural frequency of an antisymmetrical oscillation mode of the at least one measuring tube (10.1, 10.2).

9. Measuring transducer (1) according to one of the preceding claims, wherein the measuring and operating circuit (70) is arranged to excite the first symmetrical oscillation mode and the first antisymmetrical oscillation mode, to determine the natural frequencies of the first symmetrical oscillation mode and the first antisymmetrical oscillation mode on the basis of the natural frequencies of the first symmetrical oscillation mode and the first antisymmetrical oscillation mode a density measurement value or mass flow rate measurement value for a medium flowing in the measuring tube, and to determine the natural frequencies of the first symmetrical oscillation mode and the first antisymmetrical oscillation mode. medium, whereby the density measured value or the mass flow rate measured value is corrected with regard to a resonator effect due to gas loading of the medium.

## Revendications

1. Capteur de mesure (1), comprenant :
un oscillateur (10) avec au moins un tube de mesure (10.1, 10, 2) pour le guidage d'un fluide ;
seulement un dispositif d'excitation (11) pour exciter l'oscillateur (10) en vibrations de flexion du au moins un tube de mesure (10.1, 10, 2) ;
au moins un agencement de capteurs (12a) côté entrée pour détecter les oscillations de flexion du au moins un tube de mesure (10.1, 10, 2) ; et
au moins un agencement de capteurs (12b) côté sortie pour détecter les
les vibrations de flexion du ou des tubes de mesure ; et
un circuit de mesure et d'exploitation (70), qui est conçu pour mesurer le dispositif d'excitation (11) avec un signal d'excitation, et de détecter des signaux de capteurs des dispositifs de capteurs (12a, 12b) côté entrée et côté sortie, et de déterminer une valeur de mesure de densité et/ou une valeur de mesure de débit massique sur la base des signaux de capteurs,
le dispositif d'excitation comprenant un premier ensemble d'excitation (11.1) qui est fixé à l'au moins un tube de mesure (10.1), et un deuxième ensemble d'excitation (11.2) par rapport auquel l'au moins un tube de mesure doit être excité pour osciller, le premier ensemble d'excitation (11.1) présentant un centre de gravité qui, à des tolérances de fabrication près, se situe dans un plan transversal de tube de mesure (EQ) qui s'étend perpendiculairement à l'au moins un tube de mesure (10.1, 10.2), et par rapport auquel l'au moins un tube de mesure (10.1, 10.2) est excité pour osciller. dans lequel le au moins un tube de mesure (10.1, 10.2) présente une forme sensiblement symétrique par rapport à un miroir. l'évolution ;
l'agencement d'excitation (11) comprenant un excitateur électrodynamique (18) et au moins un corps de masse d'équilibrage (19.1, 19.2), l'excitateur électrodynamique étant conçu pour exercer une force d'excitation (FE) sur le au moins un tube de mesure (10.1, 10.2), la force d'excitation (FE) étant appliquée sur le au moins un tube de mesure (10.1, 10.2).
entre les premier et deuxième ensembles d'excitation (11.1, 11.2), un centre effectif de la force d'excitation étant localisé en dehors du plan transversal du tube de mesure (EQ),
dans lequel le premier ensemble d'excitation (11.1) comprend un aimant, dans lequel le deuxième ensemble d'excitation (11.2) comprend une bobine (18.2) adaptée pour générer un champ magnétique alternatif avec lequel l'aimant (18.1) interagit afin d'induire les oscillations de l'ensemble d'excitation (11.1). mesure (10.1, 10.2) ;
**caractérisé en ce que** le premier module d'excitation (11.1) présente un corps de support (15.1) sur lequel sont disposés l'aimant (18.1) et la masse d'équilibrage (18.2), le corps de support (15.1) étant conçu de manière symétrique par rapport au plan transversal du tube de mesure (EQ) ; et
le premier sous-ensemble d'excitation (11.1) est fixé au moyen d'un point d'assemblage à l'au moins un élément de fixation (11.2) tube de mesure (10.1), le plan transversal (EQ) du tube de mesure par le point d'assemblage.

2. Capteur de mesure (1) selon la revendication 1, dans lequel le au moins un tube de mesure (10.1, 10.2) présente une longueur d'oscillation libre qui s'étend entre une fixation côté entrée du tube de mesure et une fixation côté sortie du tube de mesure (10.1, 10.2), le
centre de la force d'excitation n'est pas inférieur à 0,5% de la longueur d'oscillation libre et n'est pas distant du plan transversal du tube de mesure (EQ) de plus de 10% de la longueur d'oscillation libre.

3. Capteur de mesure (1) selon l'une des revendications précédentes, dans lequel un axe principal d'inertie du premier ensemble d'excitation (11.1) s'étend dans le plan transversal du tube de mesure (EQ)

4. Capteur de mesure (1) selon l'une des revendications précédentes, les ensembles de capteurs (12a, 12b) étant respectivement conçus comme des ensembles de capteurs électrodynamiques.

5. Capteur de mesure (1) selon l'une quelconque des revendications précédentes, dans lequel l'oscillateur (10) présente en outre un deuxième tube de mesure (10.2), le premier tube de mesure (10.1) et le deuxième tube de mesure (10.2) s'étendant symétriquement l'un par rapport à l'autre par rapport à un plan longitudinal du capteur de mesure, le plan longitudinal du capteur de mesure s'étendant perpendiculairement au plan transversal (EQ) du tube de mesure.

6. Capteur de mesure (1) selon la revendication 5, dans lequel le deuxième module d'excitation (11.2) est relié à des capteurs de mesure (1). le deuxième tube de mesure (10.2) est fixé par rapport au premier module d'excitation (11.1), le centre de gravité du deuxième module d'excitation (11.2) étant situé dans le plan transversal du tube de mesure (EQ), à l'exception de tolérances de fabrication.

7. Capteur de mesure (1) selon la revendication 5 ou 6 dans lequel un axe d'inertie principal du deuxième ensemble d'excitation (11.2) s'étend dans le plan transversal du tube de mesure (EQ)

8. Capteur de mesure (1) selon l'une quelconque des revendications précédentes, dans lequel l'excitateur Le signal de mesure comprend un signal périodique ayant la fréquence propre d'un mode d'oscillation symétrique du au moins un tube de mesure et/ou la fréquence propre d'un mode d'oscillation antisymétrique du au moins un tube de mesure (10.1, 10.2).

9. Capteur de mesure (1) selon l'une quelconque des revendications précédentes, dans lequel le capteur de mesure (1) est conçu pour mesurer la température de l'eau. et le circuit de fonctionnement (70) est adapté pour exciter le premier mode d'oscillation symétrique et le premier mode d'oscillation antisymétrique, pour calculer les fréquences propres du premier mode d'oscillation symétrique et du premier mode d'oscillation antisymétrique sur la base des fréquences propres du premier mode d'oscillation symétrique et du premier mode d'oscillation antisymétrique une valeur de mesure de densité ou une valeur de mesure de débit massique pour un fluide contenu dans le tube de mesure.
la valeur de mesure de la masse volumique ou la valeur de mesure du débit massique corrigé en ce qui concerne un effet de résonance dû à une charge de gaz dans le milieu.
